(19) Europäisches Patentamt
European Patent Office
Office européen des brevets

(11) **EP 2 587 278 A1**

(12) **EUROPEAN PATENT APPLICATION**

(43) Date of publication:
**01.05.2013 Bulletin 2013/18**

(51) Int Cl.:
**G01S 17/95** (2006.01)   **G01S 7/497** (2006.01)
**G01N 15/02** (2006.01)   **B64D 15/20** (2006.01)

(21) Application number: **12187949.8**

(22) Date of filing: **10.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.10.2011 US 201113280922**

(71) Applicant: **ROSEMOUNT AEROSPACE INC.**
**Burnsville, MN 55306-4898 (US)**

(72) Inventors:
• **Ray, Mark D**
**Burnsville, MN Minnesota 55306 (US)**
• **Halama, Gary E**
**Rosemount, MN Minnesota 55068 (US)**
• **Anderson, Kaare J**
**Farmington, MN Minnesota 55024 (US)**
• **Nesnidal, Michael P**
**Shackopee, MN Minnesota 55379 (US)**

(74) Representative: **Bailey, Richard Alan**
**Marks & Clerk LLP**
**20 Imperial Square**
**Cheltenham**
**GL50 1QZ (GB)**

(54) **Methods of determining the liquid water content of a cloud**

(57)    Methods of determining a size distribution of water droplets in a cloud are described herein. In some embodiments, a method of determining a size distribution of water droplets in a cloud comprises sampling a depth of a cloud with a beam of electromagnetic radiation, measuring echo intensities of the electromagnetic radiation returned from the cloud with a detector, determining a measured optical extinction coefficient from the measured echo intensities, determining a measured backscatter coefficient from the measured echo intensities, determining a lidar ratio from the measured optical extinction coefficient and the measured backscatter coefficient, determining from the lidar ratio a value pair comprising a shape parameter ($\mu$) and median volume diameter ($D_{MVD}$) of the water droplets, and determining a size distribution of the water droplets using the value pair (p, $D_{MVD}$).

Fig. 1

EP 2 587 278 A1

**Description**

FIELD

The present invention relates to methods of determining the liquid water content of a cloud.

BACKGROUND

The liquid water content (LWC) of a cloud varies based on cloud type and can be linked to different cloud formations and weather events. In addition, clouds having different LWCs and associated water droplet size distributions can present different risks of ice formation on aircraft exteriors, such as wings. Therefore, knowing the LWC of a cloud can be important for aviation safety. The LWC of a cloud can be estimated in various ways. Several existing methods, for example, merely assume an effective droplet diameter based on prior research investigating droplet size distributions of clouds. Such assumptions, however, can introduce significant error in the LWC estimate. More accurate estimates of LWC can be achieved through the use of multiple sensing apparatus working in conjunction with one another to provide the requisite parameters for estimating LWC. While more accurate, the use of multiple sensors is often expensive with a concomitant increase in system complexity.

SUMMARY

In one aspect, methods of estimating the LWC of a cloud are described herein. In some embodiments, LWC of a cloud is derived from the size distribution of water droplets in the cloud. Therefore, in another aspect, methods of determining a size distribution of water droplets in a cloud are described herein.

In some embodiments, a method of determining a size distribution of water droplets in a cloud comprises sampling a depth of the cloud with a beam of electromagnetic radiation, measuring echo intensities of the electromagnetic radiation returned from the cloud with a detector, determining a measured optical extinction coefficient from the measured echo intensities, determining a measured backscatter coefficient from the measured echo intensities and determining a lidar ratio from the measured optical extinction coefficient and the measured backscatter coefficient. A value pair comprising a shape parameter ($\mu$) and median volume diameter ($D_{MVD}$) of the water droplets is determined from the lidar ratio, and a size distribution of the water droplets ($n(D)$) is determined using the value pair ($\mu$, $D_{MVD}$). The size distribution of the water droplets is used to determine the effective droplet diameter ($D_{eff}$), and the LWC of the cloud is then determined using the $D_{eff}$.

In some embodiments, a plurality of value pairs ($\mu$, $D_{MVD}$) are determined from the lidar ratio and a plurality of water droplet size distributions are determined using the value pairs.

In some embodiments, wherein a plurality of water droplet size distributions are determined, a method described herein further comprises providing a plurality of calculated optical extinction coefficients from the plurality of droplet size distributions and comparing the calculated optical extinction coefficients to the measured optical extinction coefficient. The water droplet size distribution associated with the calculated optical extinction coefficient most closely approximating the measured optical extinction coefficient, in some embodiments, is selected and the effective droplet diameter ($D_{eff}$) is determined from this selected droplet size distribution. The LWC of the cloud is then determined using the $D_{eff}$.

In some embodiments wherein a plurality of water droplet size distributions are determined, a method described herein further comprises providing a plurality of calculated backscatter coefficients from the plurality of droplet size distributions and comparing the calculated backscatter coefficients to the measured backscatter coefficient. The water droplet size distribution associated with the calculated backscatter coefficient most closely approximating the measured backscatter coefficient, in some embodiments, is selected and the effective droplet diameter ($D_{eff}$) is determined from this selected droplet size distribution. The LWC of the cloud is then determined using the $D_{eff}$.

These and other embodiments are described in greater detail in the detailed description which follows.

BRIEF DESCRIPTION OF THE DRAWINGS

Figure 1 illustrates a look-up table comprising a graph useful in some embodiments of methods described herein.
Figure 2 illustrates a look-up table comprising a graph useful in some embodiments of methods described herein.
Figure 3 is a flow chart illustrating one embodiment of a method described herein.
Figure 4 is a flow chart illustrating one embodiment of a method described herein.

DETAILED DESCRIPTION

Embodiments described herein can be understood more readily by reference to the following detailed description and drawings. Elements, apparatus, and methods described herein, however, are not limited to the specific embodiments presented in the detailed description and drawings. It should be recognized that these embodiments are merely illustrative of the principles of the present invention. Numerous modifications and adaptations will be readily apparent to those of skill in the art without departing from the spirit and scope of the invention.

In one aspect, methods of estimating the LWC of a cloud are described herein. In some embodiments, LWC of a cloud is derived from the size distribution of water droplets in the cloud. Therefore, in another aspect, methods of determining a size distribution of water droplets in a cloud are described herein.

In some embodiments, a method of determining a size distribution of water droplets in a cloud comprises sampling a depth of a cloud with a beam of electromagnetic radiation, measuring echo intensities of the electromagnetic radiation returned from the cloud with a detector, determining a measured optical extinction coefficient from the measured echo intensities, determining a measured backscatter coefficient from the measured echo intensities and determining a lidar ratio from the measured optical extinction coefficient and the measured backscatter coefficient. A value pair comprising a shape parameter ($\mu$) and median volume diameter ($D_{MVD}$) of the water droplets is determined from the lidar ratio, and a size distribution of the water droplets is determined using the value pair ($\mu$, $D_{MVD}$). The size distribution of the water droplets is used to determine the effective droplet diameter (($D_{eff}$), and the LWC of the cloud is then determined using the $D_{eff}$.

In some embodiments, a plurality of value pairs ($\mu$, $D_{MVD}$) are determined from the lidar ratio and a plurality of water droplet size distributions are determined using the value pairs.

In some embodiments, wherein a plurality of water droplet size distributions are determined, a method described herein further comprises providing a plurality of calculated optical extinction coefficients from the plurality of droplet size distributions and comparing the calculated optical extinction coefficients to the measured optical extinction coefficient. The water droplet size distribution associated with the calculated optical extinction coefficient most closely approximating the measured optical extinction coefficient, in some embodiments, is selected and $D_{eff}$ is determined from this selected droplet size distribution. The LWC of the cloud is then determined using the $D_{eff}$.

In some embodiments wherein a plurality of water droplet size distributions are determined, a method described herein further comprises providing a plurality of calculated backscatter coefficients from the plurality of droplet size distributions and comparing the calculated backscatter coefficients to the measured backscatter coefficient. The water droplet size distribution associated with the calculated backscatter coefficient most closely approximating the measured backscatter coefficient, in some embodiments, is selected and $D_{eff}$ is determined from this selected droplet size distribution. The LWC of the cloud is then determined using the $D_{eff}$.

Turning now to specific steps of methods described herein, a method described herein comprises sampling a depth of a cloud with electromagnetic radiation. A cloud can be sampled with electromagnetic radiation to any depth not inconsistent with the objectives of the present invention. In some embodiments, the cloud is sampled to a depth no greater than the distance over which the cloud is homogeneous or substantially homogeneous. In some embodiments, the cloud is sampled to a depth of up to about 30 meters (m). In some embodiments, the cloud is sampled to a depth of up to about 20 m.

The beam of electromagnetic radiation can comprise any beam not inconsistent with the objectives of the present invention. In some embodiments, the beam of electromagnetic radiation comprises a beam emitted from a laser. In some embodiments, the laser beam is polarized. In some embodiments, the laser beam is circularly polarized. In some embodiments, the laser beam comprises a pulsed laser beam or a continuous wave laser beam. In some embodiments, the continuous wave laser beam is chopped. Moreover, in some embodiments, the beam of electromagnetic radiation is emitted from a light emitting diode.

The beam of electromagnetic radiation can comprise any wavelength distribution not inconsistent with the objectives of the present invention. In some embodiments, for example, the beam is a monochromatic or substantially monochromatic beam. In some embodiments, the beam of electromagnetic radiation has a wavelength in the infrared (IR) region of the electromagnetic spectrum. In some embodiments, the beam of electromagnetic radiation has a wavelength in the near infrared (NIR) region of the spectrum. In some embodiments, the beam of electromagnetic radiation has a wavelength in the visible region of the spectrum. In some embodiments, the beam of electromagnetic radiation has a wavelength in the ultraviolet (UV) region of the spectrum. The beam of electromagnetic radiation, in some embodiments, has a wavelength not absorbed or substantially absorbed by water. In some embodiments, the beam of electromagnetic radiation has one or more wavelengths falling in an optical window not absorbed by water. In some embodiments, for example, the beam of electromagnetic radiation has a wavelength of about 905 nm.

Moreover, the beam of electromagnetic radiation can have any power not inconsistent with the objectives of the present invention. In some embodiments, the beam of electromagnetic radiation has an intensity of mW to tens of mW.

In some embodiments, the beam of electromagnetic radiation comprises a calibrated beam. A calibrated beam, in some embodiments, has sufficiently known and/or stable characteristics to permit the measurement of calibrated echo intensities. Calibrated echo intensities, in some embodiments, refer to echo intensities measured in radiometric units, such as $W/cm^2$, as opposed to dimensionless units (e.g., relative to another measurement). Calibration of the beam of electromagnetic radiation and measurement of calibrated echo intensities can be dependent on one or more considerations, including intensity of the beam, transmission efficiency of the entire optical train (both transmit and receive), detector sensitivity and transmission characteristics of the external window of the housing in which the beam source is disposed.

As described herein, echo intensities of the electromagnetic radiation retuned from the cloud are measured with a detector. Any detector not inconsistent with the objectives of the present invention may be used in the measurement of the echo intensities. In some embodiments, the detector comprises a solid state photodetector. In some embodiments, the detector comprises a photodiode, such as a photodiode array. The photodiode, in some embodiments, comprises one or more of silicon (Si), germanium (Ge), indium gallium arsenide ($InGa_xAs_{1-x}$), lead (II) sulfide (PbS), and combinations thereof. In some embodiments, the detector comprises at least one photosensitive element and one or more circuits for processing the output of the at least photosensitive element. The one or more circuits, in some embodiments, comprise filtering circuits and/or amplification circuits. In some embodiments, a detector is calibrated for the measurement of calibrated echo intensities.

Measuring the echo intensities of the electromagnetic radiation returned from the cloud with a detector can be executed in any manner not inconsistent with the objectives of the present invention. In some embodiments, for example, the echo intensities are parsed into range resolved slices. The range resolved slices can have any thickness not inconsistent with the objectives of the present invention. In some embodiments, the range resolved slices have a thickness of about 5 m or less. In some embodiments, the range resolved slices have a thickness of about 1 m or less.

In some embodiments, the echo intensities received from range R can be described according to the equation:

$$P(R) = K \cdot G(R) \cdot \beta \cdot e^{-2\alpha R}, \qquad (1)$$

wherein K is a constant dependent on instrumental parameters (such as aperture size of the beam source, beam intensity, and transmission efficiency of the optics of the beam source), G(R) is the geometric form function of the detector, $\beta$ is the backscatter coefficient (in units of $m^{-1}\,sr^{-1}$), and $\alpha$ is the optical extinction coefficient (in units of $m^{-1}$).

In some embodiments, sampling a depth of the cloud and measuring the echo intensities is conducted with a single apparatus. In some embodiments, an apparatus used for sampling a depth of a cloud and measuring echo intensities is coupled to an aircraft. In some embodiments, sampling the depth of a cloud and measuring the echo intensities is conducted while the aircraft is in-flight.

In some embodiments, a suitable apparatus for sampling a depth of a cloud and measuring echo intensities as described herein is disclosed in United States Patent 7,986,408, the entirety of which is hereby incorporated by reference. In some embodiments, sampling the depth of a cloud and measuring the echo intensities is conducted with more than one apparatus. One or more apparatuses used to sample the depth of the cloud and measure the echo intensities, in some embodiments, can be used to obtain other information about the cloud, in addition to determining the droplet size distribution and/or LWC of the cloud.

Methods described herein comprise determining a measured optical extinction coefficient ($\alpha$) from the measured echo intensities. Determining a measured optical extinction coefficient can be conducted in any manner not inconsistent with the objectives of the present invention. In some embodiments, the measured echo intensities display time dependent decay. Therefore, determining a measured optical extinction coefficient from the measured echo intensities can comprise fitting the measured echo intensities to a known decay curve. The decay curve, in some embodiments, is an exponential decay curve.

Moreover, methods described herein comprise determining a measured backscatter coefficient from the measured echo intensities. Determining a measured backscatter coefficient can be conducted in any manner not inconsistent with the objectives of the present invention. In some embodiments, for example, the measured backscatter coefficient is determined from normalized, range corrected echo intensities. The normalized, range corrected echo intensities can be described according to the following equation derived from equation (1) above:

$$N(R) = P(R) / [K \cdot G(R)] = \beta \cdot e^{-2\alpha R}, \qquad (2)$$

with the result that the backscatter coefficient can be described by the following equation:

$$\beta = N(R)e^{2\alpha R}. \qquad (3)$$

wherein $\alpha$ is the measured optical extinction coefficient. In some embodiments described above, the cloud is sampled over a depth wherein the composition of the cloud is considered to be homogeneous. As a result, $\alpha$ and $\beta$ are not regarded as functions of R as in the cases of space-based and terrestrial lidars performing large-scale cloud sounding. In some embodiments, a plurality of measured backscatter coefficients are determined from the echo intensities of the range resolved slices and averaged to provide an average measured backscatter coefficient and corresponding standard deviation of the measured backscatter coefficient. In some embodiments, the plurality of measured backscatter coefficients are determined from equation (3), wherein N(R) represents the echo intensities of a range resolved slice.

Once the measured optical extinction coefficient and measured backscatter coefficient have been determined, a lidar ratio (S) is calculated according to the equation:

$$\alpha / \beta = S \qquad (4)$$

In some embodiments, $\beta$ is a single measured value or an averaged measured value.

A value pair comprising a shape parameter ($\mu$) and a median volume diameter of the water droplets ($D_{MVD}$) is determined from the lidar ratio. Determination of a value pair ($\mu$, $D_{MVD}$) can be carried out in any manner not inconsistent with the objectives of the present invention. In some embodiments, determining a value pair comprises using a look-up table. In some embodiments, the look-up table comprises a table and/or a graph. The table and/or graph, in some embodiments, comprises a curve of the theoretical lidar ratio as a function of median volume diameter for a gamma distribution of droplet sizes with a chosen value of the shape parameter ($\mu$). Such plots are described, for example, in O'Connor, E. J.; Illingworth, A. J.; and Hogan, R. J., "A technique for autocalibration of cloud lidar," Journal of Atmospheric and Oceanic Technology, 2004, 21 (5), pp. 777-786, the entirety of which is hereby incorporated by reference.

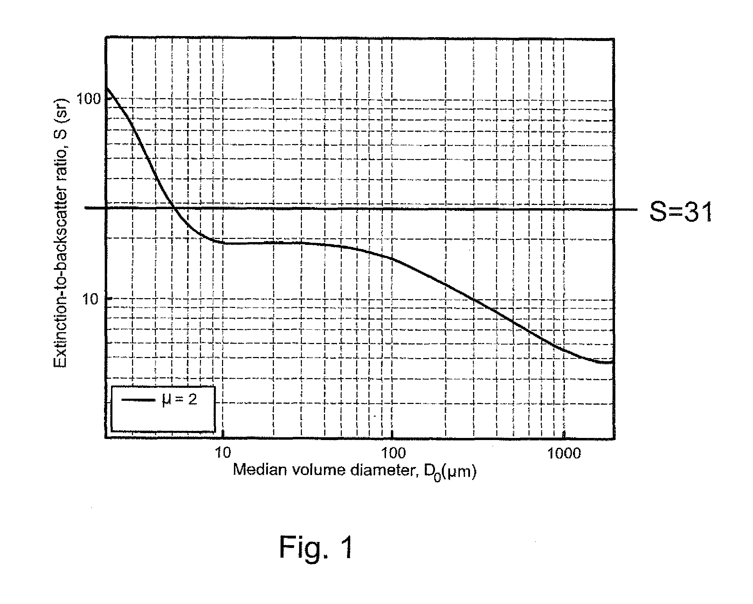

Figure 1 illustrates a graph useful as a look-up table in some embodiments described herein. The value pair ($\mu$, $D_{MVD}$) is determined from the look-up table by drawing a horizontal line across the graph at the lidar ratio (S) value determined from equation (4). The point of intersection of the horizontal line with the curve of the theoretical lidar ratio as a function of droplet median volume diameter provides $D_{MVD}$. $\mu$ is known according to the predetermined value assigned to $\mu$ for the generation of the curve in Figure 1, For example, in Figure 1, the lidar ratio (S) is determined according to equation (4) to be 31. A line at S = 31 is drawn laterally across the graph of Figure 1 and intersects the curve at 3.3 $\mu$m, thereby assigning a 3.3 $\mu$m value to $D_{MVD}$. $\mu$ is assigned a value of 2 as the curve was generated according to $\mu$ = 2. The value pair, is therefore (2, 3.3 $\mu$m).

In some embodiments, a non-graphical look-up table can be derived from a graph, such as the graph illustrated in Figure 1. The look-up table can comprise $D_{MVD}$ values for each value of S based on intersection(s) with a curve derived from a set value of $\mu$. As described further herein, a graph can comprise a plurality of curves based on multiple set values of $\mu$, thereby permitting more than one value of $D_{MVD}$ per value of S.

Determination of a value pair ($\mu$, $D_{MVD}$) permits determination of a size distribution $n(D)$ for the water droplets of the cloud. In some embodiments of methods described herein, the water droplet size distribution is determined according to the equation:

$$n(D) = n_0 \left( \frac{D}{D_{MVD}} \right)^{\mu} \exp\left( \frac{-(3.67 + \mu)D}{D_{MVD}} \right) \qquad (5)$$

wherein $n_o$ is a droplet number concentration per unit of droplet diameter in $m^{-3}\mu m^{-1}$. In some embodiments, $n_o$ is measured. In some embodiments, $n_o$ is determined according to the equation:

$$n_0 = 4.35 \cdot 10^{(6-4\mu)} (D_{MVD})^{\mu} e^{7.05\mu} . \qquad (6)$$

In some embodiments, a method described herein further comprises determining the effective droplet diameter

($D_{eff}$) using $n(D)$. In some embodiments, $D_{eff}$ is determined according to the equation:

$$D_{eff} = \frac{\int_0^\infty D^3\, n(D)\, dD}{\int_0^\infty D^2\, n(D)\, dD} \qquad (7)$$

wherein $n(D)$ is the droplet size distribution.

Methods described herein further comprise determining the liquid water content of the cloud. In some embodiments, the LWC of the cloud is determined using $D_{eff}$. In some embodiments, for example, LWC is determined according to the equation:

$$LWC = 3\rho\alpha D_{eff}, \qquad (8)$$

wherein $\rho$ is the density of water and $\alpha$ is the optical extinction coefficient.

Methods described herein of determining a size distribution of water droplets in a cloud are not limited to determining a single value pair or a single size distribution. In some embodiments, a method described herein comprises determining a plurality of value pairs ($\mu$, $D_{MVD}$) from the lidar ratio and determining a plurality of water droplet size distributions using the value pairs ($\mu$, $D_{MVD}$). The plurality of value pairs can be determined in a manner consistent with that described herein for a single value pair using a look-up table comprising a table and/or graph.

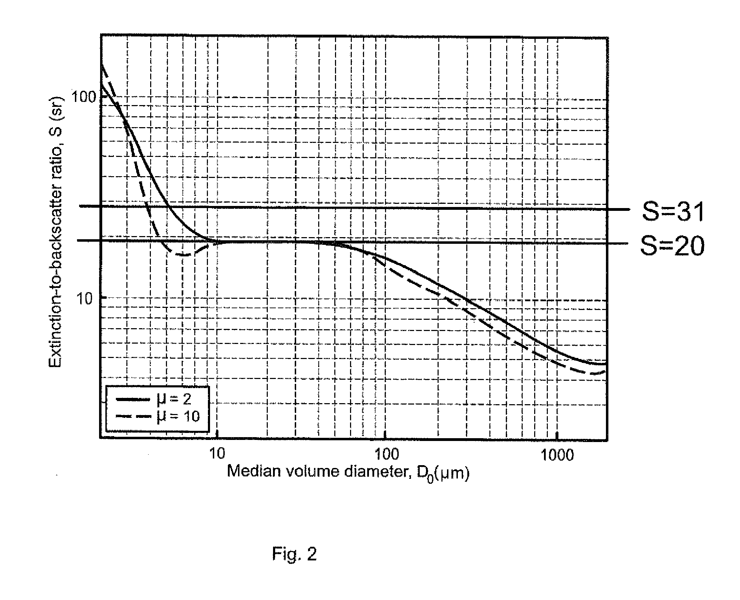

Figure 2 illustrates a graph useful as a look-up table in some embodiments described herein. As illustrated in Figure 2, the graph comprises two curves determined according to two different values of $\mu$. The solid curve is determined according to $\mu$ = 2, and the dashed curve is determined according to $\mu$ = 10. In one embodiment, S is assigned a value of 31 according to equation 4. Similar to Figure 1, a horizontal line is drawn across the graph at S = 31. The horizontal line (S = 31) intersects the solid curve ($\mu$ = 2) at 3.3 $\mu$m to provide a value pair ($\mu$, $D_{MVD}$) of (2, 3.3$\mu$ m). The horizontal line (S = 31) also intersects the dashed curve ($\mu$ = 10) at 1.7 $\mu$m to provide a value pair (10, 1.7 $\mu$m). In some embodiments, a look-up table graph can comprise any desired number of curves for potential intersection with an S value to provide a plurality of value pairs.

Moreover, in some embodiments, a plurality of value pairs can be provided with a single curve of a graph. Figure 2 additionally illustrates an embodiment wherein S is assigned a value of 20 according to equation (4) and a horizontal line is drawn across the graph. The horizontal line (S = 20) intersects the solid curve ($\mu$ = 2) along a flat region of the curve to provide a plurality of $D_{MVD}$ values, yielding a plurality of value pairs (2, $D_{MVD}$) for the single curve ($\mu$ = 2). The horizontal line (S = 20) also intersects the dashed line ($\mu$ = 10) along a flat region of the curve to provide a plurality of $D_{MVD}$ values, yielding a plurality of value pairs (10, $D_{MVD}$) for the single curve ($\mu$ = 10).

In some embodiments, a non-graphical look-up table can be derived from a graph, such as the graph illustrated in Figure 2. The look-up table can comprise $D_{MVD}$ values for each value of S based on intersections with curves derived from set values of $\mu$. Look-up tables are not limited to the curves illustrated in Figures 1 and 2 herein. It is within the purview of one of skill in the art to provide the desired parameters of a look-up table for operation with the methods described herein. In some embodiments, look-up tables are provided in an electronic format for use with computer or processor based systems.

A plurality of water droplet size distributions $n(D)$ can be determined using the value pairs in any manner not inconsistent with the objectives of the present invention. In some embodiments, the water droplet size distributions $n(D)$ are determined according to equation (5). In some embodiments, $n_o$ of equation (5) is measured. In some embodiments, $n_o$ is determined according to equation (6).

In some embodiments, methods described herein further comprise providing a plurality of calculated optical extinction coefficients from the plurality of water droplet size distributions $n(D)$ determined using the value pairs. The calculated optical extinction coefficients can be provided in any manner not inconsistent with the objectives of the present invention, In some embodiments, the calculated optical extinction coefficients ($\alpha$) are provided according to the equation:

$$\alpha = \frac{\pi}{4} \int_0^\infty n(D)\, D^2 Q_{ext}\, dD$$

(9)

wherein $Q_{ext}$ is determined from Mie theory for spherical water droplets having the same index of refraction.

In some embodiments, methods described herein further comprise comparing the calculated optical extinction coefficients to the measured optical extinction coefficient and selecting the water droplet size distribution $n(D)$ associated with the calculated optical extinction coefficient most closely approximating the measured optical extinction coefficient. The selected $n(D)$ is subsequently used to determine $D_{eff}$ and the LWC of the cloud. In some embodiments, $D_{eff}$ and LWC are determined according to equations (7) and (8) herein.

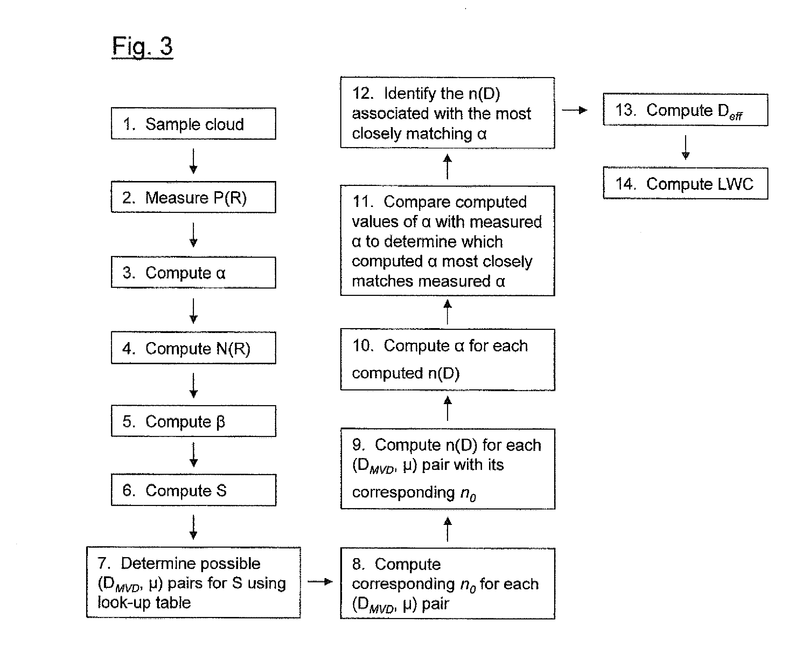

Figure 3 illustrates a flow chart of a method according to one embodiment described herein wherein a plurality of value pairs are determined. With reference to Figure 3, a depth of cloud is sampled using a laser beam. The echo intensities (P(R)) of the electromagnetic radiation returned from the cloud are measured. The intensity of laser echoes received from range R is given by equation (1) herein.

The measured optical extinction coefficient ($\alpha$) is determined from the measured echo intensities P(R), and the normalized, range-corrected signal N(R) is then obtained from P(R) according to equation (2). The measured backscatter coefficient ($\beta$) is obtained using the measured optical extinction coefficient ($\alpha$) and N(R) according to equation (3). In some embodiments, a measured backscatter coefficient is determined for each of the range resolved slices, and the backscatter coefficients are averaged to obtain an averaged measured backscatter coefficient and associated standard deviation for use in subsequent steps of the method.

After determining values for the measured optical extinction coefficient and measured backscatter coefficient ($\alpha$ and $\beta$, respectively), the lidar ratio (S) is determined by equation (4). This determined lidar ratio (S) is later used in conjunction with a look-up table to identify value pairs ($\mu$, $D_{MVD}$) as described herein. Upon identification of the value pairs ($\mu$, $D_{MVD}$), a corresponding droplet number concentration $n_o$ is determined for each value pair according to equation (6) to provide a value triplet ($\mu$, $D_{MVD}$, $n_o$). A calculated water droplet size distribution $n(D)$ is then determined for each value triplet according to equation (5). From each calculated droplet size distribution $n(D)$, a calculated optical extinction coefficient ($\alpha$) is determined according to one equation (9).

The calculated optical extinction coefficients are compared to the measured optical extinction coefficient, and the calculated optical extinction coefficient most closely approximating the measured optical extinction coefficient is identified. The water droplet size distribution $n(D)$ associated with the calculated optical extinction coefficient most closely approximating the measured optical extinction coefficient is selected and used to calculate $D_{eff}$ according to equation (7). The LWC of the cloud is then determined according to equation (8).

In some embodiments, methods described herein further comprise providing a plurality of calculated backscatter coefficients from the plurality of water droplet size distributions $n(D)$ determined using the value pairs ($\mu$, $D_{MVD}$). The calculated backscatter coefficients can be provided in any manner not inconsistent with the objectives of the present invention. In some embodiments, the calculated backscatter coefficients ($\beta$) are provided according to the equation:

$$\beta = \frac{\pi}{4} \int_0^\infty n(D)\, D^2 \left( \frac{dQ_{scat}(\lambda, D)}{d\Omega} \right)_{\Omega = \pi} dD$$

(10)

wherein $\left( \dfrac{dQ_{scat}(\lambda, D)}{d\Omega} \right)_{\Omega = \pi}$ is determined from Mie theory for spherical water droplets having the same index of refraction.

In some embodiments, methods described herein further comprise comparing the calculated backscatter coefficients to the measured backscatter coefficient and selecting the water droplet size distribution $n(D)$ associated with the calculated backscatter coefficient most closely approximating the measured backscatter coefficient. The selected $n(D)$ is subsequently used to determine $D_{eff}$ and the LWC of the cloud. In some embodiments, $D_{eff}$ and LWC are determined according to equations (7) and (8) herein.

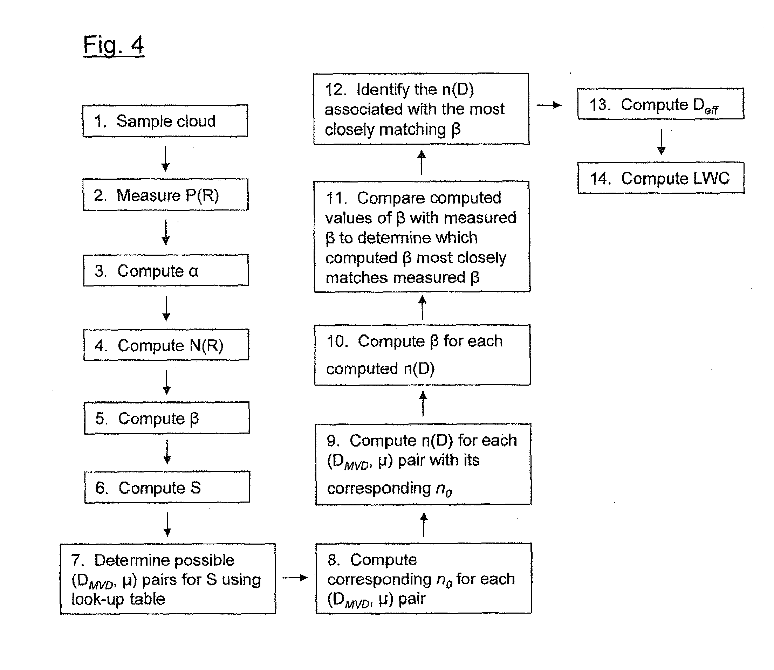

Figure 4 illustrates a flow chart of a method according to one embodiment described herein. With reference to Figure 4, a depth of cloud is sampled using a laser beam. The echo intensities (P(R)) of the electromagnetic radiation returned from the cloud are measured. The intensity of laser echoes received from range R is given by equation (1) herein.

The measured optical extinction coefficient ($\alpha$) is determined from the measured echo intensities P(R), and the normalized, range-corrected signal N(R) is then obtained from P(R) according to equation (2). The measured backscatter coefficient ($\beta$) is obtained using the measured optical extinction coefficient ($\alpha$) and N(R) to equation (3). In some embodiments, a measured backscatter coefficient is determined for each of the range resolved slices, and the measured backscatter coefficients are averaged to obtain an averaged measured backscatter coefficient and associated standard deviation for use in subsequent steps of the method.

After determining values for the measured optical extinction coefficient and measured backscatter coefficient ($\alpha$ and $\beta$, respectively), the lidar ratio (S) is determined by equation (4). This determined lidar ratio (S) is later used in conjunction with a look-up table to identify value pairs ($\mu$, $D_{MVD}$) as described herein. Upon identification of the value pairs ($\mu$, $D_{MVD}$), a corresponding droplet number concentration $n_o$ is determined for each value pair according to equation (6) to provide a value triplet ($\mu$, $D_{MVD}$, $n_o$). A calculated water droplet size distribution $n(D)$ is then determined for each value triplet according to equation (5). From each calculated droplet size distribution $n(D)$, a calculated backscatter coefficient ($\beta$) is determined according to one equation (10).

The calculated backscatter coefficients are compared to the measured backscatter coefficient, and the calculated backscatter coefficient most closely approximating the measured backscatter coefficient is identified. The water droplet size distribution $n(D)$ associated with the calculated backscatter coefficient most closely approximating the measured backscatter coefficient is selected and used to calculate the effective droplet diameter ($D_{eff}$) according to equation (7). The LWC of the cloud is then determined according to equation (8).

It is contemplated that methods described herein can be at least in part executed and/or implemented on computer or processor-based systems. In some embodiments, the computer or processor-based systems are part of an aircraft operating system.

Various embodiments of the invention have been described in fulfillment of the various objects of the invention. It should be recognized that these embodiments are merely illustrative of the principles of the present invention. Numerous modifications and adaptations thereof will be readily apparent to those skilled in the art without departing from the spirit and scope of the invention.

## Claims

1. A method of determining a size distribution of water droplets in a cloud comprising:

   sampling a depth of a cloud with a beam of electromagnetic radiation;
   measuring echo intensities of the electromagnetic radiation returned from the cloud with a detector;
   determining a measured optical extinction coefficient from the measured echo intensities;
   determining a measured backscatter coefficient from the measured echo intensities;
   determining a lidar ratio from the measured optical extinction coefficient and the measured backscatter coefficient;
   determining from the lidar ratio a value pair comprising a shape parameter ($\mu$) and median volume diameter ($D_{MVD}$) of the water droplets; and
   determining a size distribution of the water droplets using the value pair ($\mu$, $D_{MVD}$).

2. The method of claim 1, wherein measuring the echo intensities comprises parsing the echo intensities into range resolved slices.

3. The method of claim 2, wherein the range resolved slices have a thickness of about 1 m or less.

4. The method of claim 1, wherein the backscatter coefficient is determined from normalized, range corrected echo intensities.

5. The method of claim 2, wherein a plurality of backscatter coefficients are determined from the echo intensities of the range resolved slices and averaged to provide an average measured backscatter coefficient and corresponding standard deviation of the measured backscatter coefficient.

6. The method of claim 1, wherein the size distribution of the water droplets is determined according to the function:

$$n(D) = n_0 \left(\frac{D}{D_{MVD}}\right)^{\mu} \exp\left(\frac{-(3.67 + \mu)D}{D_{MVD}}\right)$$

wherein $n_o$ is a droplet number concentration per unit of droplet diameter in m$^{-3}$ μm$^{-1}$.

7. The method of claim 6, wherein $n_o$ is determined according to the equation:

$$n_0 = 4.35 \cdot 10^{(6-4\mu)} (D_{MVD})^{\mu} e^{7.05\mu} .$$

8. The method of claim 1 further comprising determining the effective droplet diameter ($D_{eff}$) using the size distribution of the water droplets.

9. The method of claim 1 further comprising determining a plurality of value pairs ($\mu$, $D_{MVD}$) from the lidar ratio and determining a plurality of size distributions of the water droplets using the value pairs ($\mu$, $D_{MVD}$).

10. The method of claim 9, wherein the size distributions of the water droplets are determined according to the function:

$$n(D) = n_0 \left(\frac{D}{D_{MVD}}\right)^{\mu} \exp\left(\frac{-(3.67 + \mu)D}{D_{MVD}}\right)$$

wherein $n_o$ is a droplet number concentration per unit of droplet diameter in m$^{-3}$ μm$^{-1}$.

11. The method of claim 10, wherein $n_o$ is determined according to the equation:

$$n_0 = 4.35 \cdot 10^{(6-4\mu)} (D_{MVD})^{\mu} e^{7.05\mu} .$$

12. The method of claim 9 further comprising providing a plurality of calculated optical extinction coefficients from the plurality of size distributions and comparing the calculated optical extinction coefficients to the measured optical extinction coefficient.

13. The method of claim 12, wherein the calculated optical extinction coefficients are provided according to the equation:

$$\alpha = \frac{\pi}{4} \int_0^{\infty} n(D) D^2 Q_{ext} \, dD$$

wherein $Q_{ext}$ is determined from Mie theory for spherical water droplets having the same index of refraction.

14. The method of claim 12 further comprising selecting the size distribution associated with the calculated optical extinction coefficient most closely approximating the measured optical extinction coefficient and determining the effective droplet diameter ($D_{eff}$) using the selected size distribution.

15. The method of claim 9 further comprising providing a plurality of calculated backscatter coefficients from the plurality of size distributions and comparing the calculated backscatter coefficients to the measured backscatter coefficient.

16. The method of claim 15, wherein the calculated backscatter coefficients are provided according to the equation:

$$\beta = \frac{\pi}{4} \int_0^\infty n(D) D^2 \left( \frac{dQ_{scat}(\lambda, D)}{d\Omega} \right)_{\Omega = \pi} dD$$

wherein $\left( \dfrac{dQ_{scat}(\lambda, D)}{d\Omega} \right)_{\Omega = \pi}$ is determined from Mie theory for spherical water droplets having the same index of refraction.

17. The method of claim 15 further comprising selecting the size distribution associated with the calculated backscatter coefficient most closely approximating the measured backscatter coefficient and determining the effective droplet diameter ($D_{eff}$) from the selected size distribution.

18. The method of any of claims 8, 14 and 17 further comprising determining the liquid water content of the cloud using the $D_{eff}$.

19. The method of claim 1, wherein the measured echo intensities are calibrated intensities.

20. The method of claim 1, wherein sampling the depth of the cloud and measuring the echo intensities is conducted with an apparatus coupled to an in-flight aircraft.

Fig. 1

EP 2 587 278 A1

Fig. 2

## Fig. 3

1. Sample cloud

↓

2. Measure P(R)

↓

3. Compute α

↓

4. Compute N(R)

↓

5. Compute β

↓

6. Compute S

↓

7. Determine possible $(D_{MVD}, \mu)$ pairs for S using look-up table

→

8. Compute corresponding $n_0$ for each $(D_{MVD}, \mu)$ pair

↑

9. Compute n(D) for each $(D_{MVD}, \mu)$ pair with its corresponding $n_0$

↑

10. Compute α for each computed n(D)

↑

11. Compare computed values of α with measured α to determine which computed α most closely matches measured α

↑

12. Identify the n(D) associated with the most closely matching α

→

13. Compute $D_{eff}$

↓

14. Compute LWC

EP 2 587 278 A1

13

## Fig. 4

1. Sample cloud

2. Measure P(R)

3. Compute $\alpha$

4. Compute N(R)

5. Compute $\beta$

6. Compute S

7. Determine possible $(D_{MVD}, \mu)$ pairs for S using look-up table

8. Compute corresponding $n_0$ for each $(D_{MVD}, \mu)$ pair

9. Compute n(D) for each $(D_{MVD}, \mu)$ pair with its corresponding $n_0$

10. Compute $\beta$ for each computed n(D)

11. Compare computed values of $\beta$ with measured $\beta$ to determine which computed $\beta$ most closely matches measured $\beta$

12. Identify the n(D) associated with the most closely matching $\beta$

13. Compute $D_{eff}$

14. Compute LWC

Europäisches
Patentamt

European
Patent Office

Office européen
des brevets

## EUROPEAN SEARCH REPORT

Application Number

EP 12 18 7949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EWAN J. O'CONNOR ET AL: "A Technique for Autocalibration of Cloud Lidar", JOURNAL OF ATMOSPHERIC AND OCEANIC TECHNOLOGY, vol. 21, no. 5, 1 May 2004 (2004-05-01), pages 777-786, XP055050874, ISSN: 0739-0572 * the whole document * | 1-20 | INV. G01S17/95 G01S7/497 G01N15/02 B64D15/20 |
| X | SHUKI CHAW ET AL.: "Using MIE Raman S ratio lidar measurements to explore clouddroplet properties and the aerosol indirect effect", PROC. OF SPIE, vol. 7460, 12 August 2009 (2009-08-12), XP040501794, DOI: DOI: 10.1117/12.826230 ISBN: 9780819477507 * sec. 3, 4.4 * | 1,2 | |
| X | EWAN J. O'CONNOR ET AL.: "Retrieving stratocumulus drizzle parameters using Doppler radar and lidar", JOURNAL OF APPLIED METEOROLOGY, vol. 44, no. 1, January 2005 (2005-01), pages 14-27, XP55051014, ISSN: 0894-8763 * Sec. 3 * | 1-20 | TECHNICAL FIELDS SEARCHED (IPC) G01S G01N B64D |
| A | YONGHUA WU ET AL: "Calibration of the 1064 nm lidar channel using water phase and cirrus clouds", APPLIED OPTICS, OPTICAL SOCIETY OF AMERICA, WASHINGTON, DC; US, vol. 50, no. 21, 20 July 2011 (2011-07-20), pages 3987-3999, XP001564268, ISSN: 0003-6935, DOI: 10.1364/AO.50.003987 [retrieved on 2011-07-14] * the whole document * | 1-20 | |

The present search report has been drawn up for all claims

| Place of search | Date of completion of the search | Examiner |
|---|---|---|
| Munich | 25 January 2013 | Rudolf, Hans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7986408 B

**Non-patent literature cited in the description**

- **O'CONNOR, E. J. ; ILLINGWORTH, A. J. ; HOGAN, R. J.** A technique for autocalibration of cloud lidar. *Journal of Atmospheric and Oceanic Technology,* 2004, vol. 21 (5), 777-786